# EUROPÄISCHE PATENTSCHRIFT

(11) **EP 2 503 018 B1**
(45) Veröffentlichungstag und Bekanntmachung des Hinweises auf die Patenterteilung: **29.08.2018**
(21) Anmeldenummer: 12154006.6
(22) Anmeldetag: 06.02.2012
(51) Int. Cl.: C23C 4/11, C23C 4/10, C23C 4/12, B01D 53/22, B01D 67/00, C23C 4/134

(54) **Plasmaspritzverfahren zum Herstellen einer ionenleitenden Membran**
Plasma spray method for producing an ion conducting membrane
Procédé de projection par plasma pour la fabrication d'une membrane conductrice d'ions

(30) Priorität: 23.03.2011 EP 11159374
(43) Veröffentlichungstag der Anmeldung: 26.09.2012
(73) Patentinhaber: Sulzer Metco AG, 5610 Wohlen (CH)
(72) Erfinder: Gindrat, Malko, Dr., 5610 Wohlen (CH); Damani, Rajiv J., Dr., 8404 Winterthur (CH)
(74) Vertreter: Intellectual Property Services GmbH

(56) Entgegenhaltungen:
- EP-A1- 1 338 671
- EP-A1- 1 479 788
- EP-A1- 1 852 519
- EP-A1- 2 025 772
- EP-A1- 2 030 669

## Beschreibung

Die Erfindung betrifft ein Plasmaspritzverfahren zum Herstellen einer ionenleitenden Membran gemäss dem Oberbegriff des unabhängigen Patentanspruchs.

lonenleitende Membrane sind Membrane, die für spezifische Ionen eine hohe selektive Permeabilität aufweisen, so sind beispielsweise sauerstoffpermeable Membrane Schichten, die eine hohe selektive Permeabilität für Sauerstoff aufweisen und für andere Gase im Wesentlichen undurchlässig sind. Dementsprechend werden solche Membrane genutzt, um Sauerstoff aus Gas- oder Fluidgemischen zu extrahieren oder zu reinigen.

Derartige Membrane können aus verschiedenen Materialien hergestellt werden, beispielsweise können sie aus komplexen Oxid-Materialien bestehen, die eine spezifische chemische Zusammensetzung haben und spezifische Phasen bilden. Insbesondere sind keramische Membrane bekannt, die aus Oxiden vom Perowskit-Typ bestehen und die in Form dünner, dichter -d.h. nicht-poröser - Schichten hergestellt werden. Derartige Membrane weisen beispielsweise sowohl eine lonenleitfähigkeit für Sauerstoff auf als auch eine Elektronenleitfähigkeit.

Ein Material, das heute zur Herstellung insbesondere sauerstoffpermeabler Membrane untersucht und verwendet wird, ist eine Keramik, die eine perowskitische Struktur aufweist und neben Sauerstoff die Elemente Lanthan (La), Strontium (Sr), Kobalt (Co) und Eisen (Fe) enthält. Nach den Anfangsbuchstaben dieser vier Elemente wird die Substanz üblicherweise als LSCF bezeichnet.

Sauerstoffpermeable Membrane oder allgemein ionenleitende Membrane aus derartigen Materialien können beispielsweise mittels konventioneller Herstellungstechniken für Keramiken, wie beispielsweise Pressen, Foliengiessen (tape casting), Schlickerglessen oder Sintern, hergestellt werden oder auch mittels thermischen Spritzens. Für letzteres sind insbesondere thermische Spritzprozesse geeignet, die im Vakuum durchgeführt werden, womit allgemein gemeint ist, dass der Spritzprozess bei einem Prozessdruck durchgeführt ist, der kleiner als der Umgebungsdruck (normaler Luftdruck) ist.

Insbesondere geeignet ist ein thermisches Niederdruck- oder Vakuum-Plasmaspritzverfahren, das als LPPS Verfahren bezeichnet wird (Low Pressure Plasma Spraying) Mit diesem Vakuum-Plasmasprltzverfahren lassen sich nämlich besonders gut dünne und dichte Schichten spritzen, also solche, die auch für ionenleitende oder sauerstoffpermeable Membrane benötigt werden.

In der Praxis hat sich nun gezeigt, dass beim Vakuum-Plasmaspritzen solcher Membrane die chemische Zusammensetzung der spritztechnisch erzeugten Schicht nicht mehr mit der chemischen Zusammensetzung des als Ausgangsmaterial verwendeten Pulvers übereinstimmt, dass also die erzeugte Schicht nicht mehr die angestrebte chemische Zusammensetzung aufweist, oder dass die Phasenzusammensetzung der Schicht nicht mehr die gleiche ist, wie die des Ausgangsmaterials. So lässt sich beispielsweise bei perowskitischen Substanzen beobachten, dass die gewünschte Phase - hier also die perowskitische Phase - nicht mehr oder nur noch in verringertem Masse ausgebildet ist. Speziell lässt sich manchmal der Niederschlag von metallischen Elementen wie z.B. Eisen oder Kobalt an den Wänden der Prozesskammer beobachten,

In der EP 1 338 671 A1 und EP 2 030 669 A1 wird die Herstellung von Sauerstoff transportierenden Membranen durch Plasmasprühabscheldung auf einem Substrat beschrieben.

Das Aufbringen eines keramischen Beschichtungsmaterials auf einem Substrat wird in der EP 1 852 519 A1 beschrieben. Hierbei wird mittels einem Metall Me, das im Substrat enthalten ist, bei Anwesenheit von Sauerstoff oxidiert, sodass eine keramische Zwischenschicht erzeugt wird, auf der das keramische Beschichtungsmaterial abgeschieden wird.

Es ist daher eine Aufgabe der Erfindung, dieses Problem zu lösen und ein Plasmaspritzverfahren vorzuschlagen, mit welchem eine ionenleitende und speziell sauerstoffpermeable Membranbesserer Güte hergestellt werden kann.

Der diese Aufgabe lösenden Gegenstand der Erfindung ist durch den unabhängigen Verfahrensanspruch gekennzeichnet.

Erfindungsgemäss wird also ein Plasmaspritzverfahren zum Herstellen einer ionenleitenden Membran gemäss Anspruch 1 vorgeschlagen. Während des Spritzens wird der Prozesskammer Sauerstoff mit einer Flussrate zugeführt, die mindestens 1%, vorzugsweise mindestens 2% der Gesamtflussrate des Prozessgases beträgt.

Vorzugsweise herrscht während des Spritzens in der Prozesskammer eine inerte Atmosphäre oder eine Atmosphäre mit reduziertem Sauerstoffgehalt Es hat sich gezeigt, dass durch die Massnahme des Zuführens von Sauerstoff unerwünschten chemischen Änderungen des Ausgangsmaterials während des thermischen Spritzens entgegengewirkt werden kann, wodurch sowohl die chemische Zusammensetzung der spritztechnisch erzeugten Schicht als auch ihre Phase der gewünschten Zusammensetzung entspricht. Durch Zuführen von Sauerstoff während des thermischen Spritzens wird es effizient vermieden, dass es beim thermischen Spritzen in der Prozesskammer zur Ausbildung einer Atmosphäre mit reduzierenden Eigenschaften kommt. Dadurch wird beispielsweise vermieden, dass im Ausgangsmaterial enthaltene Metalloxide reduziert werden und sich in Form elementarer Metalle oder in Form von Verbindungen derer, an den Wänden der Prozesskammer niederschlagen. Im speziellen kann die Ausscheidung von metallischem Kobalt oder Eisen und deren Verbindungen beim Spritzen von LSCF-Pulver vermieden oder zumindest deutlich verringert werden, sodass ionenleitende und speziell sauerstoffpermeable Membrane besserer Güte hergestellt werden können.

Bevorzugt weist die Membran neben ihrer lonenleitfähigkeit auch eine Elektronenleitfähigkeit auf.

Vorzugsweise wird der Plasmaspritzprozess so geführt, dass das Plasma den Prozessstrahl defokussiert und beschleunigt. Mit diesem Verfahren lassen sich besonders gut dünne und dichte Schichten herstellen. Der Prozessdruck in der Prozesskammer wird auf einen Wert von mindestens 50 Pa und höchstens 2000 Pa eingestellt. Besonders bevorzugt wird das Verfahren so geführt, dass das Ausgangsmaterial ein Pulver ist, dessen chemische Zusammensetzung im wesentlichen die gleiche ist wie die chemische Zusammensetzung der Schicht, d.h. als Ausgangsmaterial wird ein Pulver verwendet, welches im wesentlichen die gleiche chemische Zusammensetzung aufweist, welche auch die gespritzte Schicht aufweisen soll.

Zudem ist es bevorzugt, das Verfahren so zu führen, dass das Ausgangsmaterial ein Pulver ist, dessen Phasenzusammensetzung im wesentlichen die gleiche ist, wie die Phasenzusammensetzung der Schicht.

Bei einem bevorzugten Ausführbeispiel besteht die die Membrane bildende Schicht aus einem keramischen Material, das ein Oxid vom Perowskit-Typ ist.

Im Hinblick auf die Sauerstoffpermeabilität hat es sich besonders bewährt, wenn die Schicht aus einem Perowskit besteht, welches Lanthan (La), Strontium (Sr), Kobalt (Co) und Eisen (Fe) enthält. Es versteht sich, dass in diesem Zusammenhang mit dem Begriff "besteht" gemeint ist, dass der überwiegende Teil der Schicht in Form der perowskitischen Phase vorliegt. Natürlich ist es durchaus möglich, dass in kleinerem Masse auch andere Phasen in dieser Schicht vorliegen.

In der Praxis hat es sich bewährt, wenn die Gesamtflussrate des Prozessgases beim Plasmaspritzen 100 bis 160 SLPM beträgt (SLPM: standard liter per minute). Bei einer ersten bevorzugten Verfahrensführung ist das Prozessgas eine Mischung aus Argon und Helium.

Bei einer zweiten bevorzugten Verfahrensführung besteht das Prozessgas aus Argon, Helium und Wasserstoff.

Vorzugsweise wird das Plasmaspritzverfahren so durchgeführt, dass die auf dem Substrat erzeugte Schicht eine Dicke von weniger als 150 Mikrometer und vorzugsweise von 20 bis 60 Mikrometer aufweist. Diese Schichtdicke hat sich für die sauerstoffpermeablen Membrane bewährt.

Auch hat es sich als vorteilhaft erwiesen, wenn der Prozessstrahl relativ zur Oberfläche des Substrats geschwenkt oder gerastert wird. Dies kann beispielsweise durch das Schwenken des Plasmagenerators bzw. der Plasmaquelle bzw. der Austrittsdüse erfolgen. Der Prozessstrahl wird also relativ zum Substrat so geführt, dass das Substrat gerastert wird, also ein- oder mehrmals von dem Prozessstrahl überstrichen wird. Alternativ oder ergänzend ist es natürlich auch möglich, das Substrat zu bewegen. Es gibt natürlich viele Möglichkeiten, diese Relativbewegung zwischen Prozessstrahl und Substrat zu realisieren. Diese Schwenkbewegung bzw. das Rastern des Substrats bewirkt, dass der in die Prozesskammer eingeleitete Sauerstoff möglichst gut mit dem Prozessstrahl oder der sich auf dem Substrat aufbauenden Schicht in Kontakt kommt.

Das Verfahren eignet sich insbesondere auch für den Anwendungsfall, bei welchem die ionenleitende Membran eine sauerstoffpermeable Membran ist, welche eine lonenleitfähigkeit für Sauerstoff aufweist.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:

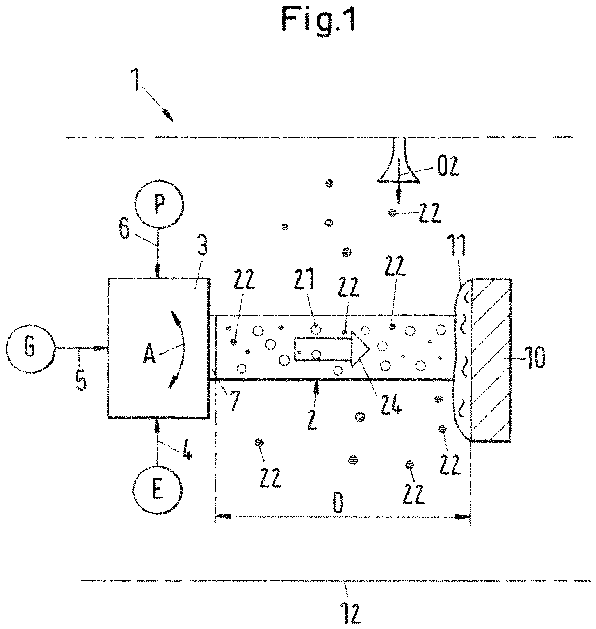

- Fig. 1: eine schematische Darstellung einer Vorrichtung zur Durchführung eines erfindungsgemässen Verfahrens.

Das erfindungsgemässe Plasmaspritzverfahren zum Herstellen einer ionenleitenden Membran wird im Folgenden anhand des für die Praxis besonders wichtigen Anwendungsfalls erläutert, dass die Membran eine selektiv für Sauerstoff permeable Membran ist, die also eine lonenleitfähigkeit für Sauerstoff aufweist. Vorzugsweise hat die Membran zudem auch eine Elektronenleitfähigkeit. Das Verfahren ist ein thermisches Spritzverfahren, das im Vakuum durchgeführt wird, also bei einem Prozessdruck, der kleiner ist als der Umgebungsdruck.

Fig. 1 zeigt in einer sehr schematischen Darstellung eine Plasmaspritzvorrichtung, die gesamthaft mit dem Bezugszeichen 1 bezeichnet ist, und die zur Durchführung eines erfindungsgemässen Verfahrens geeignet ist. Zudem ist in Figur 1 schematisch ein Substrat 10 dargestellt, auf welchem eine sauerstoffpermeable Membran in Form einer Schicht 11 abgeschieden wird. Ferner ist eine Prozesskammer 12 angedeutet, in welcher das Verfahren durchgeführt wird.

Das erfindungsgemässe Verfahren umfasst ein Plasmaspritzen, welches gattungsgemäss in der WO-A-03/087422 oder auch in der US-A-5,853,815 beschrieben ist. Dieses Plasmaspritzverfahren ist ein thermisches Spritzen zur Herstellung eines sogenannten LPPS-Dünnfilms (LPPS = Low Pressure Plasma Spraying).

Speziell wird mit der in Fig. 1 dargestellten Plasmaspritzvorrichtung 1 ein LPPS-basiertes Verfahren durchgeführt. Bei diesem wird ein konventionelles LPPS-Plasmaspritzverfahren verfahrenstechnisch abgewandelt, wobei ein von Plasma durchströmter Raum ("Plasmaflamme" oder "Plasmastrahl") aufgrund der Änderungen ausgeweitet und auf eine Länge von bis zu 2.5 m ausgedehnt wird. Die geometrische Ausdehnung des Plasmas führt zu einer gleichmässigen Aufweitung - einer "Defokussierung" - und einer Beschleunigung eines Prozessstrahls, der mit einem Fördergas in das Plasma injiziert wird. Das Material des Prozessstrahls, das im Plasma zu einer Wolke dispergiert und dort teilweise oder vollständig geschmolzen wird, gelangt gleichmässig verteilt auf die Oberfläche des Substrats 10.

Die in Fig. 1 dargestellte Plasmaspritzvorrichtung 1 umfasst einen an sich bekannten Plasmagenerator 3 mit einem nicht näher dargestellten Plasmabrenner zur Erzeugung eines Plasmas. In an sich bekannter Weise wird mit dem Plasmagenerator 3 aus einem Ausgangsmaterial P, einem Prozessgas bzw. einem Prozessgasgemisch G und elektrischer Energie E ein Prozessstrahl 2 erzeugt. Die Einspeisung dieser Komponenten E, G und P ist in Fig. 1 durch die Pfeile 4, 5, 6 symbolisiert. Der erzeugte Prozessstrahl 2 tritt durch eine Austrittsdüse 7 aus und transportiert das Ausgangsmaterial P in Form des Prozessstrahls 2, in dem Materialpartikel 21 in einem Plasma dispergiert sind. Dieser Transport ist durch den Pfeil 24 symbolisiert. Die Materialpartikel 21 sind in der Regel Pulverpartikel. Die Morphologie der auf dem Substrat 10 abgeschiedenen Schicht 11 ist von den Prozessparametern abhängig und insbesondere vom Ausgangsmaterial P, der Prozessenthalpie und der Temperatur des Substrats 10. Vorzugsweise ist der Plasmagenerator 3 bzw. der Plasmabrenner schwenkbar bezüglich des Substrats 10 wie dies der Doppelpfeil A in Fig. 1 andeutet. Somit kann der Prozessstrahl 2 in einer Schwenkbewegung über das Substrat 10 hin- und herbewegt werden.

Bei dem hier beschriebenen LPPS-Prozess wird bei einem niedrigen Prozessdruck, der mindestens 50 Pa und höchstens 2000 Pa ist, das Ausgangsmaterial P in ein den Materialstrahl defokussierendes Plasma injiziert und darin teilweise oder vollständig geschmolzen oder zumindest plastisch gemacht. Dazu wird ein Plasma mit ausreichend hoher spezifischer Enthalpie erzeugt, so dass eine sehr dichte und dünne Schicht 11 auf dem Substrat entsteht. Die Variation der Gefüge ist durch die Beschichtungsbedingungen, insbesondere von Prozess-enthalpie, Arbeitsdruck in der Beschichtungskammer sowie den Prozessstrahl wesentlich beeinflusst und steuerbar. Somit hat der Prozessstrahl 2 Eigenschaften, die durch steuerbare Prozessparameter bestimmt werden.

Zur Herstellung der sauerstoffpermeablen Membran wird die Schicht 11 so erzeugt, dass sie eine sehr dichte Mikrostruktur aufweist.

Zunächst wird nun der Verfahrensschritt des Erzeugens der Schicht 11 mittels LPPS näher erläutert.

Als Ausgangsmaterial P wird ein Pulver geeigneter Zusammensetzung gewählt, wie dies weiter hinten noch erläutert wird. Wie bereits erwähnt, ist beim LPPS- Verfahren die Plasmaflamme aufgrund der eingestellten Prozessparameter im Vergleich zu konventionellen Plasmaspritzverfahren sehr lang. Zudem ist die Plasmaflamme stark aufgeweitet. Es wird ein Plasma mit hoher spezifischer Enthalpie erzeugt, wodurch eine hohe Plasmatemperatur resultiert. Durch die hohe Enthalpie und die Länge bzw. die Grösse der Plasmaflamme bedingt kommt es zu einem sehr hohen Energieeintrag in die Materialpartikel 21, die dadurch zum einen stark beschleunigt und zum anderen auf eine hohe Temperatur gebracht werden, sodass sie sehr gut aufschmelzen und auch noch nach ihrer Deposition auf dem Substrat 10 sehr heiss sind. Da andererseits die Plasmaflamme und damit der Prozessstrahl 2 sehr stark aufgeweitet ist, ist der lokale Wärmefluss in das Substrat 10 gering, sodass eine thermische Schädigung des Materials vermieden wird. Die aufgeweitete Plasmaflamme hat ferner zur Folge, dass üblicherweise beim einmaligen Überstreichen des Substrats 10 mit dem Prozessstrahl 2 die Materialpartikel 21 in Form einzelner Spritzer (Splats) deponiert werden, die noch keine durchgehende, d.h. zusammenhängende Schicht erzeugen. Dadurch sind sehr dünne Schichten 11 herstellbar. Die hohe kinetische und thermische Energie, welche die Materialpartikel bei ihrem im Vergleich zu konventionellen Plasmaspritzverfahren langen Aufenthalt in der Plasmaflamme erhalten, begünstigen die Ausbildung einer sehr dichten Schicht 11, die insbesondere wenige Grenzflächenhohlräume zwischen aufeinanderliegenden Spritzern aufweist.

Das Plasma wird beispielsweise in einem an sich bekannten Plasmabrenner im Plasmagenerator 3 mit einem elektrischen Gleichstrom und mittels einer Stiftkatode sowie einer ringförmigen Anode erzeugt. Die Leistungsaufnahme des Plasmabrenners liegt im Bereich von bis zu 180 kW. Die dem Plasma zugeführte Leistung, die effektive Leistung, kann empirisch bezüglich der resultierenden Schichtstruktur ermittelt werden. Die effektive Leistung, die durch die Differenz zwischen der elektrischen Leistung und der durch Kühlung abgeführten Wärme gegeben ist, liegt erfahrungsgemäss z. B. im Bereich von 40 bis 130 kW, insbesondere 80 bis 100 kW. Hierzu hat es sich bewährt, wenn der elektrische Strom für die Plasmaerzeugung zwischen 1000 und 3000 A liegt, insbesondere zwischen 1500 und 2600 A.

Für den Prozessdruck des LPPS-TF-Plasmaspritzens zum Erzeugen der sauerstoffpermeablen Membran wird in der Prozesskammer 12 ein Wert zwischen 50 und 2000 Pa. Das Ausgangsmaterial P wird als Pulverstrahl in das Plasma injiziert.

Das Prozessgas für die Erzeugung des Plasmas ist vorzugsweise ein Gemisch von Inertgasen, insbesondere eine Gemisch von Argon Ar, Helium He und gegebenenfalls Wasserstoff H. In der Praxis haben sich die folgenden Gasflussraten für das Prozessgas besonders bewährt:
Ar-Flussrate: 30 bis 150 SLPM, insbesondere 50 bis 100 SLPM
H₂-Flussrate: Null bis 20 SLPM, insbesondere 2 bis 10 SLPM
He-Flussrate: Null bis 150 SLPM, insbesondere 20 bis 100 SLPM,
wobei die Gesamtflussrate des Prozessgases vorzugsweise kleiner als 200 SLPM ist und insbesondere 100 bis 160 SLPM beträgt.

Erfindungsgemäss wird während des thermischen Spritzens der Prozesskammer 12 Sauerstoff zugeführt, so wie dies durch den mit dem Bezugszeichen O2 versehenen Pfeil und die Sauerstoffteilchen 22 angedeutet ist. Dabei kommen die Sauerstoffteilchen 22 mit dem Prozessstrahl 2 und/oder mit dem Substrat 10 bzw. der sich darauf aufbauenden Schicht 11 in Kontakt. Der Sauerstoff wird der Prozesskammer mit einer Flussrate zugeführt, die mindestens 1% vorzugsweise mindestens 2% der Gesamtflussrate des Prozessgases beträgt. Die Sauerstoffteilchen 22 mischen sich in den Prozessstrahl 2 und befinden sich auch in der Nachbarschaft des Substrats 10 bzw. der sich darauf aufbauenden Schicht 11. Dadurch ist gewährleistet, dass die verschiedenen Komponenten des Ausgangsmaterials P während ihres Transports im Prozessstrahl 2 und nach der Ablagerung auf dem Substrat 10 mit den Sauerstoffteilchen 22 durchmischt werden bzw. in ihrer Nachbarschaft befinden. Die Sauerstoffteilchen 22 verhindern den Aufbau einer reduzierenden Atmosphäre, welche beispielsweise Metalloxide im Prozessstrahl 2 oder auf der Oberfläche des Substrats 10 zu elementaren Metallen oder anderen Reduktionsprodukten und Verbindungen der Ausgangsoxide reduzieren könnte. Somit verhindert der zugeführte Sauerstoff effizient die unerwünschte Reduktion von Komponenten des Ausgangsmaterials P. Um einen möglichst guten Kontakt zwischen dem Prozessstrahl bzw. der sich aufbauenden Schicht 11 einerseits und den Sauerstoffpartikel 22 zu erzielen, ist es vorteilhaft, den Plasmagenerator 3 bzw. den Plasmabrenner bezüglich der zu beschichtenden Oberfläche des Substrats 10 zu schwenken.

Es kann vorteilhaft sein, wenn das Substrat - zusätzlich oder alternativ - während des Materialauftrags mit Dreh- oder Schwenkbewegungen relativ zu dieser Wolke bewegt wird

Im Folgenden wird auf das für die Praxis wichtige Beispiel Bezug genommen, dass die sauerstoffpermeable Membrane aus einer Keramik besteht, welche neben Sauerstoff die Elemente Lanthan (La), Strontium (Sr), Kobalt (Co) und Eisen (Fe) enthält. Solche Keramiken werden als LSCF bezeichnet. Dabei wird angestrebt, dass die Membran möglichst vollständig aus einer perowskitischen Struktur besteht. Es versteht sich jedoch, dass die Erfindung nicht auf solche Substanzen beschränkt ist, sondern insbesondere auch für andere keramische Materialien, speziell Oxide vom Perowskit-Typ geeignet ist.

Wie bereits erwähnt, wird das Ausgangsmaterial P in Form eines Pulvers bereitgestellt. Das Plasmaspritzverfahren wird dann so durchgeführt, dass die chemische Zusammensetzung der Schicht zumindest im wesentlichen die gleiche ist wie die chemische Zusammensetzung des Ausgangsmaterials.

LSCF gehört als keramisches Material zu den Oxiden vom Perowskit-Typ, welche im Wesentlichen die Form ABO₃ haben. Dabei steht A für LaₓSr₁₋ₓ und B für Co_{y}Fe_{1-y}. Es ist jedoch zu bemerken, dass die Stöchiometrie nicht genau erfüllt sein muss. Es ist durchaus möglich, dass sich der La-Gehalt und der Sr-Gehalt bzw. der Co-Gehalt und der Fe-Gehalt nicht genau zu eins ergänzen. Auch kann der Sauerstoffgehalt von der exakten Stöchiometrie abweichen. Daher ist es üblich den Sauerstoffgehalt mit 3-δ anzugeben, wobei δ die Abweichung des Sauerstoffgehalts von dem stöchiometrischen Gleichgewicht bezeichnet. Das Minus-Zeichen deutet darauf hin, dass diese Abweichung in aller Regel ein Sauerstoffdefizit ist, d.h. der Sauerstoff ist unterstöchiometrisch vorhanden.

In dem hier beschriebenen Beispiel liegt LACF in der Form La_{0.58}Sr_{0.4}Co_{0.2}Fe_{0.8}O_{3-δ}
vor. Das Ausgangsmaterial P liegt als Pulver vor. Zur Herstellung der Pulverpartikel können verschiedene Verfahren angewendet werden: beispielsweise Sprühtrocknen oder eine Kombination von Aufschmelzen und anschliessendem Brechen und/oder Mahlen der erstarrten Schmelze.

Die Herstellung solcher Pulver an sich ist bekannt und bedarf hier keiner näheren Erläuterung. Im Hinblick auf das Plasmaspritzen ist es bevorzugt, wenn die Pulverkörner beispielsweise eine Grösse von 25 +/- 5µm haben.

Der Wert δ für die Abweichung des Sauerstoffgehalts von der Stöchiometrie beträgt beispielsweise 0.3.

Für die beiden im folgenden beschriebenen Beispiele wird als Ausgangsmaterial jeweils La_{0.58}Sr_{0.4}Co_{0.2}Fe_{0.8}O_{3-δ} verwendet. Der Prozessdruck in der Prozesskammer 12 wird auf einen Wert zwischen 50 und 2000 Pa eingestellt. Mit einem Plasmabrenner, der ein Plasma hoher spezifischer Enthalpie von bis zu 10'000 bis 15'000 kJ/kg erzeugen kann und der eine Leistung von bis zu 180 kW aufnimmt, wird ein Plasmastrahl bzw. ein Prozessstrahl 2 hoher Enthalpie erzeugt. Der Prozessstrahl 2 weist eine Länge von 1000 bis 2000 mm und einen Durchmesser von bis zu 200-400 mm auf. Die Länge des Prozessstrahls 2 entspricht im Wesentlichen der Spritzdistanz, das heisst dem Abstand D zwischen der Austrittsdüse 7 und dem Substrat 10. Als Substrat dient zum Beispiel eine poröse Platte aus einer Hochtemperatur-Nickelbasislegierung oder aus einer feuerfesten Keramik. Das Ausgangsmaterial P wird mittels zweier Pulverzuführungen eingebracht, wobei die Förderrate bis 120 g/min, typischerweise 40 g/min beträgt. Mittels einer Schwenkbewegung des Plasmabrenners wird eine dünne und dichte Schicht 11 auf das Substrat 10 aufgebracht, wobei der hohe Energieeintrag in die Materialpartikel 21 und die hohe (Ultraschall-) Geschwindigkeit im Prozessstrahl 2 einen sehr dichten Aufbau der Schicht 11 ermöglichen. Die Schicht 11 wird gespritzt bis sie abschliessend eine Dicke von 20-60 µm aufweist. Die Beschichtungszeit beträgt etwa eine Minute. Während des thermischen Spritzens wird der Prozesskammer 12 Sauerstoff zugeführt und zwar mit einer Flussrate von mindestens 1% vorzugsweise von mindestens 2% der Gesamtflussrate des Prozessgases. Hierdurch wird die Reduktion und die Degradation des Ausgangsmaterials P bzw. seiner Komponenten vermieden oder zumindest stark vermindert. Insbesondere lässt sich die Ausscheidung bzw. die Abscheidung von elementarem Co oder Fe oder derer Verbindungen vermeiden oder zumindest stark vermindern. Hieraus ergibt sich, dass die chemische und Phasen-Zusammensetzung der Schicht 11 im wesentlichen die gleiche ist wie die des Ausgangsmaterials P.

### Beispiel 1

Der Prozess wird wie oben beschrieben durchgeführt. Als Prozessgas wird eine Mischung aus Argon und Helium verwendet, wobei die Ar-Flussrate 80 SLPM beträgt und die He-Flussrate 40 SLPM, sodass die Gesamtflussrate des Prozessgases 120 SLPM beträgt. Der Strom für die Erzeugung des Plasmas beträgt 2600 A.

### Beispiel 2

Der Prozess wird wie oben beschrieben durchgeführt. Als Prozessgas wird eine Mischung aus Argon, Helium und Wasserstoff verwendet, wobei die Ar-Flussrate 80 SLPM beträgt, die He-Flussrate 20 SLPM und die H₂-Flussrate 6 SLPM, sodass die Gesamtflussrate des Prozessgases 106 SLPM beträgt. Der Strom für die Erzeugung des Plasmas beträgt 2600 A.

In beiden Fällen resultieren sauerstoffpermeable Membrane, deren chemische Zusammensetzung und perowskitische Phasenstruktur im Wesentlichen derjenigen des Ausgangsmaterials entsprechen.

## Patentansprüche

1. Plasmaspritzverfahren zum Herstellen einer ionenleitenden Membran, welche eine Ionenleitfähigkeit aufweist, bei welchem Verfahren die Membran In einer Prozesskammer als Schicht (11) auf einem Substrat (10) abgeschieden wird, wobei ein keramisches Material (P) In Form eines Prozessstrahls (2) mittels eines Prozessgases (G) auf eine Oberfläche des Substrats (10) aufgespritzt wird, und eine Gesamtflussrate des Prozessgases beim Plasmaspritzen 100 bis 160 SLPM beträgt, wobei das keramische Material (P) bei einem niedrigen Prozessdruck von mindestens 50 Pa und höchstens 2000 Pa, in ein Plasma injiziert und dort teilweise oder vollständig geschmolzen wird, **dadurch gekennzeichnet, dass** während des Spritzens der Prozesskammer (12) Sauerstoff (O₂; 22) derart mit einer Flussrate von mindestens 1 % der Gesamtflussrate des Prozessgases zugeführt wird, dass durch das Zuführen des Sauerstoffs unerwünschten chemischen Änderungen des keramischen Materials (P) während des thermischen Spritzens entgegengewirkt wird.

2. Verfahren nach Anspruch 1, bei welchem das Plasma den Prozessstrahl (2) defokussiert und beschleunigt.

3. Verfahren nach einem der vorangehenden Ansprüche, bei welchem während des Spritzens der Prozesskammer (12) der Sauerstoff (O2; 22) mit einer Flussrate zugeführt wird, die mindestens 2% der Gesamtflussrate des Prozessgases beträgt.

4. Verfahren nach einem der vorangehenden Ansprüche, bei welchem die die Membran bildende Schicht (11) aus einem keramischen Material besteht, das ein Oxid vom Perowskit-Typ ist.

5. Verfahren nach einem der vorangehenden Ansprüche, bei welchem die Schicht (11) aus einem Perowskit besteht, welches Lanthan (La), Strontium (Sr), Kobalt (Co) und Eisen (Fe) enthält.

6. Verfahren nach einem der vorangehenden Ansprüche, wobei das Prozessgas eine Mischung aus Argon und Helium ist

7. Verfahren nach einem der Ansprüche 1-5, bei welchem, das Prozessgas aus Argon, Helium und Wasserstoff besteht.

8. Verfahren nach einem der vorangehenden Ansprüche wobei die auf dem Substrat (10) erzeugte Schicht (11) eine Dicke von weniger als 150 Mikrometer aufweist.

9. Verfahren nach einem der vorangehenden Ansprüche wobei die auf dem Substrat (10) erzeugte Schicht (11) eine Dicke von 20 bis 60 Mikrometer aufweist.

10. Verfahren nach einem der vorangehenden Ansprüche, bei welchem der Prozessstrahl (2) relativ zur Oberfläche des Substrats (10) geschwenkt oder gerastert wird.

11. Verfahren nach einem der vorangehenden Ansprüche, bei welchem die ionenleitende Membran eine sauerstoffpermeable Membran ist, welche eine lonenleitfähigkeit für Sauerstoff aufweist.

## Claims

1. A plasma spray method for the manufacture of an ion conducting membrane having an ionic conductivity, in which method the membrane is deposited in a process chamber as a layer (11) on a substrate (10), wherein a ceramic material (P) is sprayed onto a surface of the substrate (10) by means of a process gas (G) in the form of a process beam (2) and an overall flow rate of the process gas during the plasma spraying is 100 to 160 SLPM, wherein the ceramic material (P) is injected into a plasma at a low process pressure of at least 50 Pa and at most 2000 Pa and is partially or completely melted there, **characterized in that** during thermal spraying, oxygen (O₂; 22) is supplied to the process chamber (12) at a flow rate of at least 1% of the overall flow rate of the process gas such that undesired chemical changes of the ceramic material (P) during thermal spraying are counteracted by supplying oxygen.

2. A method according to claim 1, in which the plasma defocuses and accelerates the process beam (2).

3. A method according to anyone of the preceding claims, in which the oxygen (O₂; 22) is supplied to the process chamber (12) at a flow rate of at least 2% of the overall flow rate of the process gas during thermal spraying.

4. A method according to anyone of the preceding claims, in which the layer (11), which forms the membrane, consists of a ceramic material, which is an oxide of the perovskite type.

5. A method according to anyone of the preceding claims, in which the layer (11) consists of a perovskite containing lanthanum (La), strontium (Sr), cobalt (Co) and iron (Fe).

6. A method according to anyone of the preceding claims, wherein the process gas is a mixture of argon and helium.

7. A method according to anyone of the claims 1 to 5, in which the process gas consists of argon, helium and hydrogen.

8. A method according to anyone of the preceding claims, wherein the layer (11) formed on the substrate (10) has a thickness of less than 150 micrometers.

9. A method according to anyone of the preceding claims, wherein the layer (11) formed on the substrate (10) has a thickness of 20 to 60 micrometers.

10. A method according to anyone of the preceding claims, in which the process beam (2) is pivoted or screened relative to the surface of the substrate (10).

11. A method according to anyone of the preceding claims, in which the ion conducting membrane is an oxygen-permeable membrane having an ionic conductivity for oxygen.

## Revendications

1. Un procédé de projection plasma pour la production d'une membrane conductrice d'ions ayant une conductivité ionique, dans quel procédé la membrane est déposée sous la forme d'une couche (11) sur un substrat (10) dans une chambre de traitement, dans lequel un matériau céramique (P) est pulvérisé sur une surface du substrat (10) sous la forme d'un jet de traitement au moyen d'un gaz de traitement, et un débit total de gaz de traitement pendant la pulvérisation au plasma est de 100 à 160 SLPM, dans lequel le matériau céramique (P) est injecté dans un plasma à une basse pression de traitement d'au moins 50 Pa et d'au plus 2000 Pa et est partiellement ou complètement fondu là-bas, **caractérisée en ce que** pendant la pulvérisation, de l'oxygène (O₂ ; 22) est fourni à la chambre de traitement (12) à un débit d'au moins 1 % du débit total du gaz de traitement de telle sorte que des modifications chimiques indésirables du matériau céramique (P) pendant la pulvérisation thermique sont compensées par la fourniture d'oxygène.

2. Un procédé selon la revendication 1, dans lequel le plasma défocalise et accélère le jet de traitement (2).

3. Un procédé selon l'une des revendications précédentes, dans lequel pendant la pulvérisation, l'oxygène (O₂ ; 22) est fourni à la chambre de traitement (12) à un débit, qui est d'au moins 2 % du débit total du gaz de traitement.

4. Un procédé selon l'une des revendications précédentes, dans lequel la couche (11), qui forme la membrane, est composée d'un matériau céramique, qui est un oxyde du type pérovskite.

5. Un procédé selon l'une des revendications précédentes, dans lequel la couche (11) est composée d'une pérovskite, qui contient de lanthane (La), de strontium (Sr), de cobalt (Co) et de fer (Fe).

6. Un procédé selon l'une des revendications précédentes dans lequel le gaz de traitement est un mélange d'argon et d'hélium.

7. Un procédé selon l'une des revendications 1 à 5, dans lequel le gaz de traitement est composée d'argon, d'hélium et d'hydrogène.

8. Un procédé selon l'une des revendications précédentes, dans lequel la couche (11) générée sur le substrat (10) a une épaisseur inférieure à 150 micromètres.

9. Un procédé selon l'une des revendications précédentes, dans lequel la couche (11) générée sur le substrat (10) a une épaisseur de 20 à 60 micromètres.

10. Un procédé selon l'une des revendications précédentes, dans lequel le jet de traitement (2) est pivoté ou tramé par rapport à la surface du substrat (10).

11. Un procédé selon l'une des revendications précédentes, dans lequel la membrane conductrice d'ions est une membrane perméable à l'oxygène, qui a une une conductivité ionique pour l'oxygène.
